# EUROPÄISCHE PATENTSCHRIFT

(11) **EP 3 596 564 B1**
(45) Veröffentlichungstag und Bekanntmachung des Hinweises auf die Patenterteilung: **07.06.2023**
(21) Anmeldenummer: 18719415.4
(22) Anmeldetag: 15.03.2018
(51) Int. Cl.: G05B 19/4068, B21D 5/00, G05B 19/4093

(54) **BIEGESCHRITT-AUSWAHLVERFAHREN, AUSGEFÜHRT AUF EINEM STEUERUNGSSYSTEM EINER BIEGEMASCHINE**
BENDING MACHINE SELECTION METHOD, CARRIED OUT ON A CONTROL SYSTEM OF A BENDING MACHINE
PROCÉDÉ DE SÉLECTION D'ÉTAPE DE CINTRAGE MIS EN OEUVRE SUR UN SYSTÈME DE COMMANDE D'UNE MACHINE À CINTRER

(30) Priorität: 17.03.2017 AT 502142017
(43) Veröffentlichungstag der Anmeldung: 22.01.2020
(73) Patentinhaber: TRUMPF Maschinen Austria GmbH & Co. KG., 4061 Pasching (AT)
(72) Erfinder: LEEB, Sebastian, 4040 Linz (AT)
(74) Vertreter: Burger, Hannes
(86) Internationale Anmeldenummer: PCT/AT2018/060067
(87) Internationale Veröffentlichungsnummer: WO 2018/165691

(56) Entgegenhaltungen:
- EP-A1- 2 845 661
- WO-A1-02/25207
- WO-A1-2011/117720
- XI ZHANG ET AL: "On-machine 3D vision system for machining setup modeling", THE INTERNATIONAL JOURNAL OF ADVANCED MANUFACTURING TECHNOLOGY, SPRINGER, BERLIN, DE, Bd. 48, Nr. 1-4, 2. September 2009 (2009-09-02), Seiten 251-265, XP019797876, ISSN: 1433-3015
- N N: "technica fachzeitschrift für die maschinen-, elektro- und metallindustrie", , 1. März 2012 (2012-03-01), Seiten 1-84, XP055494913, Gefunden im Internet: URL:https://vdocuments.site/download/techn ica-201203 [gefunden am 2018-07-24]

## Beschreibung

Die Erfindung betrifft ein Biegeschrittauswahlverfahren ausgeführt auf einem Steuerungssystem einer Biegemaschine, welcher Biegemaschine ein zu bearbeitender Blechteil zugeführt wurde.

Moderne Biegemaschinen mit ihren teilweise hochflexiblen Anschlagsystemen erlauben es einem Produzenten, eine Vielzahl unterschiedlicher Biegevorgänge abfolgend auf einer Biegemaschine durchzuführen. Insbesondere ist es mit heutigen modernen Biegemaschinen üblich, ein zugeschnittenes und mit entsprechenden Ausnehmungen bzw. Ausstanzungen versehenes Blechteil, in mehreren hintereinander gelagerten Biegeschritten, ausgehend vom flachen Blechteil zum fertigen Biegeteil, umzuformen.

Moderne Biegemaschinen sind zumeist auch in ein Produktionsplanungs- bzw. Arbeitsvorbereitungssystem voll integriert, wobei das zu biegende Blechteil in der Konstruktion bzw. Arbeitsvorbereitung entworfen, und als Biegeprogramm bzw. Werkstückdatensatz über eine Kommunikationsverbindung direkt an das Steuerungssystem der Biegemaschine übertragen wird. Ferner ist es möglich, dass Biegeteile in unregelmäßigen Abständen wiederkehrend gebogen werden. Daher sind auf dem Steuerungssystem einer Biegemaschine zumeist eine große Anzahl unterschiedlicher Biegeprogramme hinterlegt, welche vom Maschinenbediener an einer Mensch-Maschine-Schnittstelle ausgewählt und aktiviert werden können. Ein Problem, dass sich dabei ergibt liegt darin, dass abgewickelte Biegeteile manchmal sehr ähnlich aussehen können. Einem Maschinenbediener kann es daher schwerfallen, die abgewickelten Blechteile zu unterscheiden und das richtige Biegeprogramm für die Bearbeitung des Werkstücks auszuwählen, wodurch es zu fehlerhaft gebogenen Werkstücken kommen kann. Ferner kann es aufgrund des großen Flexibilisierungsgrades moderner Biegemaschinen vorkommen, dass Werkstücke mit sehr geringer Losgröße, insbesondere Losgröße 1 gebogen werden, sodass ein Maschinenbediener nicht auf seine Erfahrung hinsichtlich bereits gebogener Werkteile zurückgreifen kann.

Um die Wahl des richtigen Biegeprogramms für einen Maschinenbediener zu erleichtern, besteht beispielsweise die Möglichkeit, am Werkstück Markierungen anzubringen, beispielsweise indem eine Codierung aufgebracht wird. Dies bedeutet jedoch einen zusätzlichen Arbeitsschritt und hat insbesondere den Nachteil, dass bei Arbeitsschritten, welche dem Biegevorgang vorgelagert sind, diese Codierung nicht beschädigt werden darf. Die Codierung muss daher derart aufgebracht sein, dass sie beim Zuschnitt bzw. bei der Durchführung von Ausstanzungen nicht beeinträchtigt werden darf. Ferner besteht die Möglichkeit, den zu biegenden Blechteilen einen Laufzettel beizugeben, auf welchem biegeprozessrelevante Kenndaten angegeben sind. Hinsichtlich einer Ablaufoptimierung haben Laufzettel jedoch mehrere Nachteile, da die gesamte Bearbeitungskette gewährleistet werden muss, dass der Laufzettel stets mit dem Werkstück synchron bleibt und weder beschädigt wird, noch verloren geht.

Im Produktionsprozess von größeren Stückzahlen sind derartige Maßnahmen durchaus praktikabel, bei geringen Stückzahlen, insbesondere in Richtung Losgröße 1, führt ein zusätzliches mitzuführendes bzw. aufzudruckendes Merkmal zu einem wesentlich höheren Arbeitsaufwand im Vorfeld und birgt ferner die große Gefahr, dass diese Konfigurationsinformation entlang einer Bearbeitungskette unbrauchbar wird. Insbesondere wird durch derartige Zusatzmaßnahmen der Effizienzgewinn durch moderne Fertigungssysteme teilweise wieder zunichte gemacht. Aus EP 2 845 661 A1 ist eine Biegeschrittauswahlverfahren bekannt.

Die Aufgabe der Erfindung liegt nun darin, ein Verfahren zu schaffen, welches einem Maschinenbediener darin unterstützt, den, einem aktuell zu biegenden Blechteil zugehörigen Bearbeitungsdatensatz auszuwählen. Insbesondere ist es Aufgabe der Erfindung, den Maschinenbediener bei der Auswahl des geeigneten bzw. zugehörigen Bearbeitungsdatensatzes zu unterstützen und dadurch direkt die Belastung durch die Entscheidungsfindung zu minimieren. Diese Aufgabe wird durch ein Verfahren gemäß den Ansprüchen gelöst.

Das erfindungsgemäße Biegeschritt-Auswahlverfahren wird auf einem Steuerungssystem einer Biegemaschine ausgeführt, welcher Biegemaschine ein zu bearbeitender Blechteil zugeführt wurde. Das Verfahren umfasst einen Bilderfassungsschritt, einen Bild-Aufbereitungs- und Analyseschritt, einen Vergleichsschritt, einen Auswahlschritt, und einen Anwendungsschritt. Im Bilderfassungsschritt wird von einem Bilderfassungsmittel ein Abbild eines zu bearbeitenden Blechteils erfasst, und das erfasste Abbild über eine Kommunikationsverbindung an ein Datenverarbeitungsmodul übermittelt. Im Bild-Aufbereitungs- und Analyseschritt wird von einem Bildaufbereitungsmodul des Datenverarbeitungsmoduls, das Blechteil im erfassten Abbild ermittelt und ein Bearbeitungsfenster im erfassten Abbild festgelegt. Im Bearbeitungsfenster wird ein Musterfindungsprozess durchgeführt, und aus ermittelten geometrischen Merkmalen eine Ist-Teilekennzahl ermittelt. Im Vergleichsschritt wird von einem Vergleichsmodul des Datenverarbeitungsmoduls aus einem, mit dem Datenverarbeitungsmodul verbundenen Datenspeicher, in diesem hinterlegte Werkstückdatensätze ausgelesen, und daraus jeweils eine Referenz-Teilekennzahl extrahiert. Ferner wird die ermittelte Ist-Teilekennzahl mit den extrahierten Referenz-Teilekennzahlen verglichen, und beim Vergleich für jede extrahierte Referenz-Teilekennzahl ein Übereinstimmungsgrad ermittelt. Für eine Auswahl der höchsten Übereinstimmungsgrade wird aus dem, der jeweiligen Referenz-Teilekennzahl zugeordneten Werkstückdatensatz, eine Übersichtdarstellung extrahiert, und die Auswahl der Übereinstimmungsgrade zusammen mit den zugehörigen Übersichtsdarstellungen, an eine Mensch-Maschine-Schnittstelle des Steuerungssystems übermittelt. Im Auswahlschritt werden von der Mensch-Maschine-Schnittstelle die übermittelten Übereinstimmungsgrade und Übersichtsdarstellungen an einem Bildausgabemittel des Steuerungssystems dargestellt. Mittels eines Steuerelements der Mensch-Maschine-Schnittstelle wird ein Übereinstimmungsgrad bzw. die dazugehörige Übersichtsdarstellung ausgewählt, und die Auswahl an das Datenverarbeitungsmodul rückübermittelt. Im Anwendungsschritt wird vom Datenverarbeitungsmodul der, der Auswahl entsprechende Werkstückdatensatz, aus dem Datenspeicher geladen und an das Steuerungssystem übertragen. Anschließend übernimmt das Steuerungssystem die Ansteuerung der Antriebsmittel der Biegemaschine, insbesondere des Druckbalkens und der Hinteranschläge. Gegebenenfalls werden auch die Biegewerkzeuge automatisiert bzw. teilautomatisiert gerüstet. Nach dem Einlegen des korrekt ausgerichteten Blechteils, führt das Steuerungssystem, über die gesteuerte Bewegung der Biegewerkzeuge, die Schritte der Biegeumformung durch.

Mit diesen Verfahrensschritten wird gewährleistet, dass ein Maschinenbediener eine ganz wesentliche Unterstützung bei der Auswahl des korrekten Biegeprogramms für ein zu biegendes Werkstück bekommt. Da auf einem Steuerungssystem einer Biegemaschine zumeist eine Mehrzahl von Biegeprogrammen hinterlegt sind (bzw. sein können), besteht gerade bei geringen Losgrößen, insbesondere bei Losgröße 1, für den Maschinenbediener eine besondere Herausforderung darin, das für das aktuelle Werkstück passende Biegeprogramm zu wählen. Mit dem gegenständlichen Verfahren wird die Belastung für den Maschinenbediener reduziert, da dieser bereits eine Vorauswahl dargestellt bekommt, welche Vorauswahl mit großer Wahrscheinlichkeit bereits das korrekte Biegeprogramm enthält.

Im Weiteren wird gleichbedeutend von Werkstückdatensatz und Biegeprogrammen gesprochen. Das Biegeprogramm enthält die einzelnen durchzuführenden Biegeumformungen und wird vom Steuerungssystem der Biegemaschine ausgeführt, sodass nach Ablauf des Biegeprogramms, das fertig gebogene Werkstück gebildet wurde. Im Werkstückdatensatz können neben dem Biegeprogramm noch zusätzliche Daten, Information und/oder Parameter abgelegt sein.

Eine Weiterbildung besteht nun darin, dass das Bilderfassungsmittel durch ein mobiles Kommunikationsgerät, insbesondere ein Smartphone oder ein Tablet, gebildet ist, und als Kommunikationsverbindung eine Datenübertragungstechnologie für Mobilgeräte verwendet wird, insbesondere eine 2G-, 3G-, 4G- oder 5G Kommunikationstechnologie, oder WLAN. Mobile Kommunikationsgeräte haben den Vorteil, dass sie kostengünstig verfügbar sind, ein Bildaufnahmesystem aufweisen, das auf die Bilderfassung unter schwierigen Aufnahmebedingungen optimiert wurde, und dass mehrere Kommunikationstechnologien vorhanden sind, um ohne Spezialkomponenten, zuverlässig eine Kommunikationsverbindung herstellen zu können.

Eine Weiterbildung besteht aber auch darin, dass das Bilderfassungsmittel durch ein an der Biegemaschine im Bereich vor einem Druckbalken angeordnetes Kamerasystem, umfassend zumindest eine 2D Kamera, gebildet ist, und als Kommunikationsverbindung eine Datenübertragungstechnologie für kabelgebundene Kommunikation verwendet wird, beispielsweise USB, CAN-Bus oder Ethernet. An der Biegemaschine kann bereits ein Kamerasystem vorhanden sein, um bspw. einen Sicherheitsbereich überwachen zu können. Dieses Kamerasystem kann bspw. für das gegenständliche Verfahren verwendet werden. Es ist aber auch möglich, dass ein eigenständiges Kamerasystem angeordnet wird, da der Erfassungsbereich des gegenständlichen Kamerasystems auf die Einlegeposition des Blechteils gerichtet sein muss.

Es ist vorgesehen, dass mittels zumindest eines aus Fokusfreistellung, Kantendetektion, Kontrastdetektion, Hintergrundsabzug (Backgroundsubstraction) oder Bestimmung des optischen Flusses, im erfassten Abbild die Umgrenzungslinie des zu bearbeitenden Blechteils bestimmt wird und jener Bildausschnitt als Bearbeitungsfenster festgelegt wird, der die Umgrenzungslinie enthält. Dieses hat den Vorteil, dass im Rahmen der üblichen Bedienhandlung des Maschinenbedieners, das gegenständliche Verfahren das in weiteren Schritten zu analysierende Blechteil erkennt. Der Maschinenbediener nimmt das Blechteil bspw. vom Blechstapel und befördert es zur Biegemaschine. Beispielsweise mittels eines Kommandoelements an der Mensch-Maschine-Schnittstelle kann das gegenständliche Verfahren ausgelöst werden, oder es ist ein Einlegebereich festgelegt, der permanent erfasst wird. Befindet sich in diesem Bereich ein Blechteil, werden die weiteren Verfahrensschritte durchgeführt. Bevorzugt wird das Bearbeitungsfenster geringfügig größer als die Umgrenzungslinie sein, ferner wird das Bearbeitungsfenster bevorzugt rechteckig sein.

Es ist auch vorgesehen, dass im Musterfindungsprozess mittels zumindest eines aus Kantendetektion, Kontrastverstärkung, Merkmalsdetektion und Extraktion (ORB, FAST, Harris, etc.), Lernende Merkmalsdetektion (Nachbildung des Menschlichen Sehens mittels Computer), im Bearbeitungsfenster Einschnitte, Bohrungen, Umrisskanten ermittelt werden. Da diese Muster zumeist sehr charakteristisch für ein zu biegendes Teil sind, werden gemäß dieser Weiterbildung möglichst alle, bzw. wesentliche charakteristischen Elemente ermittelt. Insbesondere heben sich Einschnitte und Bohrungen besonders von der weitestgehend gleichförmigen Oberfläche des Bleches und der Umgebung ab.

Nach einer Weiterbildung ist vorgesehen, dass die Teilekennzahl als Streuwertfunktion der ermittelten geometrischen Merkmale gebildet wird, beispielsweise als Hashfunktion. Mit dieser Weiterbildung lässt sich eine komplexe Information betreffend der in einem Bild erkannten Muster, in eine einfache und vergleichbare Form überführen.

Eine Weiterbildung besteht auch darin, dass von einem Arbeitsvorbereitungssystem aus Konstruktionsdaten eine Übersichtsdarstellung des abgewickelten Blechteils eine Teilekennzahl ermittelt wird, und die Konstruktionsdaten, die Übersichtsdarstellung und die Teilekennzahl als Werkstückdatensatz erstellt und dieser im Datenspeicher des Datenverarbeitungsmoduls hinterlegt wird. Von der Arbeitsvorbereitung bzw. der Konstruktion wird der komplette Werkstückdatensatz erstellt und an die Biegemaschine übertragen. Somit hat der Maschinenbediener stets alle möglichen relevante Information ein Biegeprogramm betreffend, im Zugriff verfügbar.

Nach einer Weiterbildung ist vorgesehen, dass die übermittelten Übereinstimmungsgrade und Übersichtsdarstellungen nach absteigendem Übereinstimmungsgrad geordnet dargestellt werden. Dies hat den Vorteil, dass dem Maschinenbediener an vorderster (oberster) Position jene Übersichtsdarstellung dargestellt wird, die mit größter Wahrscheinlichkeit auf das eben erfasste Blechteil passt.

Eine Weiterbildung besteht auch darin, dass der Übereinstimmungsgrad als Anteilswert der Ist-Teilekennzahl von der Referenz-Teilekennzahl ermittelt wird. Beispielsweise kann eine Prozentangabe den Grad der Übereinstimmung mit der Referenz-Teilekennung angeben. Von Bedeutung ist, dass mit dem Übereinstimmungsgrad eine einfache und eindeutige Aussage betreffend die Anwendbarkeit des Werkstückdatensatzes auf das aktuell erfasste Werkteil möglich ist.

Von Vorteil ist ferner eine Weiterbildung nach der vorgesehen ist, dass der Auswahlschritt nur dann ausgeführt wird, wenn mehrere Übereinstimmungsgrade ermittelt wurden. Wurde eine sehr gute, bzw. totale Übereinstimmung ermittelt, muss der Maschinenbediener durch den Auswahlschritt nicht unnötig aufgehalten werden, sondern der Werkstückdatensatz wird sofort an das Steuerungssystem übertragen. Eine sehr gute Übereinstimmung ist bspw. dadurch gekennzeichnet, dass zwischen der Ist-Teilekennzahl mit dem höchsten Übereinstimmungsgrad und der nächstfolgenden ein deutlicher Werteunterschied besteht.

Zum besseren Verständnis der Erfindung wird diese anhand der nachfolgenden Figuren näher erläutert.

Es zeigen jeweils in stark vereinfachter, schematischer Darstellung:

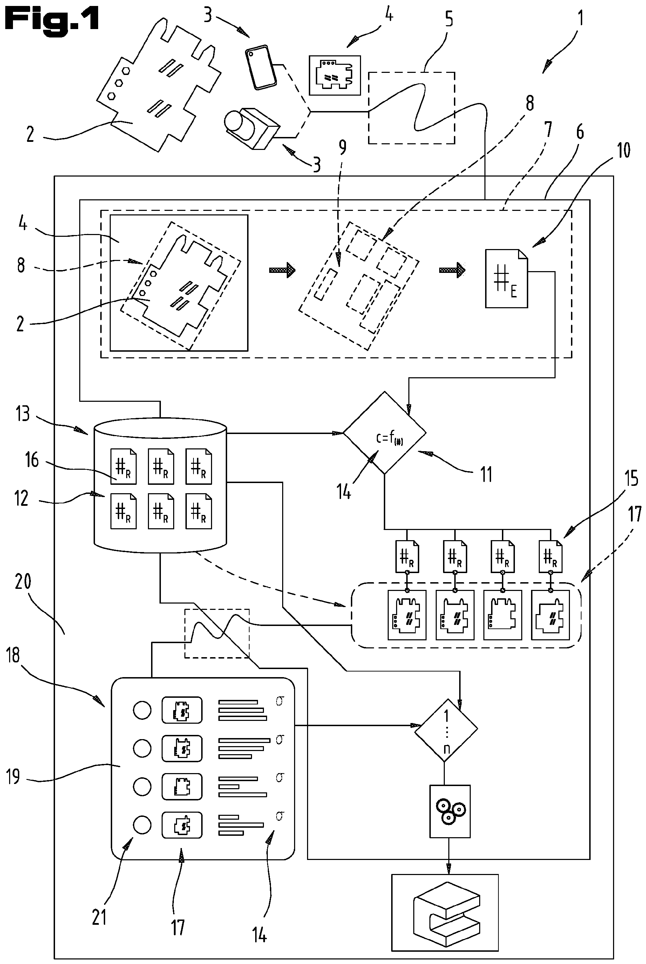

- Fig. 1: eine Prinzipdarstellung des gegenständlichen Verfahrens.

Die Figur 1 zeigt schematisch die einzelnen Schritte des gegenständlichen Biegeschritt-Auswahlverfahrens 1.

Mit diesem Verfahren soll ein Maschinenbediener einer Biegemaschine dabei unterstützt werden, dass für den umzuformenden Blechteil 2 passende Biegeprogramm auszuwählen und an ein Steuerungssystem einer Biegemaschine zu übertragen, wonach anschließend die entsprechenden Biegeschritte durchgeführt werden.

In einem Bilderfassungsschritt wird von einem Bilderfassungsmittel 3 ein Abbild 4 des zu bearbeitenden Blechteils 2 erfasst. Das erfasste Abbild wird über eine Kommunikationsverbindung 5 an ein Datenverarbeitungsmodul 6 übertragen.

Von einem Bildaufbereitungsmodul 7 des Datenverarbeitungsmoduls 6 wird im erfassten Abbild 4 das Blechteil 2 ermittelt und ein Bearbeitungsfenster 8 festgelegt. Im Bearbeitungsfenster 8 wird anschließend ein Musterfindungsprozess durchgeführt, der geometrische Merkmale 9 ermittelt und aus der Gesamtheit der ermittelten geometrischen Merkmale 9, eine Ist-Teilekennzahl 10 ermittelt.

Der Musterfindungsprozess ist dabei derart ausgebildet, dass im Bearbeitungsfenster 8 charakteristische Merkmale gesucht werden, die eindeutig zu einer Identifikation bzw. Klassifikation des Blechteils 2 dienen können. Insbesondere sind dies Kanten, Schlitze, Durchbrüche und Linien. Derartige charakteristische Merkmale 9 lassen sich besonders gut gegenüber der Umgebung bzw. der Blechoberfläche erkennen, sodass einerseits keine aufwändige Verarbeitungseinheit erforderlich ist, und andererseits eine zuverlässige und störsichere Erkennung dieser Merkmale gewährleistet ist.

Im darauffolgenden Vergleichsschritt wird von einem Vergleichsmodul 11 ein Vergleich der ermittelten Ist-Teilekennzahl 10 mit hinterlegten Referenz-Teilekennzahlen 12 durchgeführt. Dazu sind eine Mehrzahl von Referenz-Teilekennzahlen 12 in einem Datenspeicher 13 hinterlegt, welcher Datenspeicher 13 mit dem Datenverarbeitungsmodul 6, insbesondere mit dem Vergleichsmodul 11 verbunden ist. Gegebenenfalls kann der Datenspeicher 13 auch in das Datenverarbeitungsmodul 6 integriert sein. Vom Vergleichsmodul 11 wird die ermittelte Ist-Teilekennzahl 10 mit den, aus den Datenspeicher 13 extrahierten Referenz-Teilekennzahlen 12 verglichen, und jeweils ein Übereinstimmungsgrad 14 ermittelt. Für die höchsten ermittelten Übereinstimmungsgrade 14 wird eine Auswahl 15 gebildet, und aus dem, der jeweiligen Referenz-Teilekennzahl 12 zugeordneten Werkstückdatensatz 16, eine Übersichtsdarstellung 17 extrahiert.

Die Auswahl 15 der Übereinstimmungsgrade 14 wird zusammen mit den jeweils zugehörigen Übersichtsdarstellungen 17 an eine Mensch-Maschine-Schnittstelle 18 übermittelt.

In einem Auswahlschritt werden von der Mensch-Maschine-Schnittstelle 18 die übermittelten Übereinstimmungsgrade 14 sowie die zugehörigen Übersichtsdarstellungen 17 an einem Bildausgabemittel 19 des Steuerungssystems 20 dargestellt. Mittels eines Steuerelements 21 der Mensch-Maschine-Schnittstelle 18, wird ein Übereinstimmungsgrad 14 bzw. die dazu gehörige Übersichtsdarstellung 17 ausgewählt. Der gewählte Übereinstimmungsgrad 14 bzw. die zugehörige Übersichtsdarstellung 17 wird von der Mensch-Maschine-Schnittstelle 18 anschließend zurück an das Datenverarbeitungsmodul 6 übermittelt.

Vom Datenverarbeitungsmodul 6 wird der, der Auswahl entsprechende Werkstückdatensatz 16 aus dem Datenspeicher 13 geladen, aufbereitet und an das Steuerungssystem weitergegeben. Vom Steuerungssystem 20 werden hernach die Antriebsmittel der Biegemaschine entsprechend angesteuert, und in aufeinander folgenden Arbeitsschritten der Biegeteil zur gewünschten Endform umgeformt.

Der besondere Vorteil des gegenständlichen Verfahrens liegt darin, dass einem Maschinenbediener nur durch Erfassen eines Abbilds 4 des umzuformenden Blechteils 2, eine Auswahl 15, zusammen mit einer Übersichtsdarstellung 17, angezeigt wird, und dieser somit durch optischen Vergleich sehr einfach prüfen kann, ob die mit dem höchsten Übereinstimmungsgrad gefundene Übersichtsdarstellung 17 mit dem tatsächlichen Blechteil 2 übereinstimmt. Gerade bei sehr ähnlichen umzubiegenden Blechteilen 2 hat dies den besonderen Vorteil, dass dem Maschinenbediener eine bedeutende Entscheidungsarbeit abgenommen wird, indem all jene Werkstückdatensätze 16 automatisch gefiltert werden, bei denen charakteristische, geometrische Merkmale 9 nicht übereinstimmen. Gerade bei sehr geringen Stückzahlen und häufig wechselnden Aufträgen stellt dies eine entscheidende Arbeitserleichterung für den Maschinenbediener dar.

Der Werkstückdatensatz 16 ist als eine Art Daten-Container zu verstehen, in welchem neben der Referenz-Teilekennzahl 12, einer Übersichtsdarstellung 17, vor allem auch Arbeitsschritte hinterlegt sind, welche von dem Steuerungssystem 20 dazu verwendet werden, bzw. das Steuerungssystem 20 parametrieren, um die entsprechenden Biegeumformungen durchzuführen. Neben den beschriebenen Datensätzen können im Werkstückdatensatz 16 noch weitere biegeprozess- bzw. biegeparameterrelevante Informationen hinterlegt sein. Wird das Biegeprogramm vom Steuerungssystem 20 abgearbeitet, ist es bevorzugt vorgesehen, dass die einzelnen Biegeschritte am Bildausgabemittel 19 der Mensch-Maschine-Schnittstelle 18 dargestellt werden, sodass der Bediener stets eine Information darüber hat, welcher Biegeschritt an welcher Position als nächstes ausgeführt wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Biegeschritt-Auswahlverfahren
- 2: Blechteil
- 3: Bilderfassungsmittel
- 4: Abbild
- 5: Kommunikationsverbindung
- 6: Datenverarbeitungsmodul
- 7: Bildaufbereitungsmodul
- 8: Bearbeitungsfenster
- 9: geometrische Merkmale
- 10: Ist-Teilekennzahl
- 11: Vergleichsmodul
- 12: Referenz-Teilekennzahl
- 13: Datenspeicher
- 14: Übereinstimmungsgrad
- 15: Auswahl
- 16: Werkstückdatensatz
- 17: Übersichtsdarstellung
- 18: Mensch-Maschine-Schnittstelle
- 19: Bildausgabemittel
- 20: Steuerungssystem
- 21: Steuerelement

## Patentansprüche

1. Biegeschritt-Auswahlverfahren (1)
ausgeführt auf einem Steuerungssystem (20) einer Biegemaschine, welcher Biegemaschine ein zu bearbeitender Blechteil (2) zugeführt wurde
umfassend
einen Bilderfassungsschritt,
einen Bild-Aufbereitungs- und Analyseschritt,
einen Vergleichsschritt,
einen Auswahlschritt, und
einen Anwendungsschritt,
wobei
• im Bilderfassungsschritt
von einem Bilderfassungsmittel (3)
- ein Abbild (4) eines zu bearbeitenden Blechteils (2) erfasst wird,
- das erfasste Abbild (4) über eine Kommunikationsverbindung (5) an ein Datenverarbeitungsmodul (6) übermittelt wird,
• im Bild-Aufbereitungs- und Analyseschritt
von einem Bildaufbereitungsmodul (7) des Datenverarbeitungsmoduls (6),
- das Blechteil (2) im erfassten Abbild (4) ermittelt wird und ein Bearbeitungsfenster (8) im erfassten Abbild (4) festgelegt wird,
- im Bearbeitungsfenster (8) ein Musterfindungsprozess durchgeführt wird,
- und aus ermittelten geometrischen Merkmalen (9) eine Ist-Teilekennzahl (10) ermittelt wird,
• im Vergleichsschritt
von einem Vergleichsmodul (11) des Datenverarbeitungsmoduls (6)
- aus einem, mit dem Datenverarbeitungsmodul (6) verbundenen Datenspeicher (13), in diesem hinterlegte Werkstückdatensätze ausgelesen werden, und daraus jeweils eine Referenz-Teilekennzahl (12) extrahiert wird,
- die ermittelte Ist-Teilekennzahl (10) mit den extrahierten Referenz-Teilekennzahlen (12) verglichen wird,
- beim Vergleich für jede extrahierte Referenz-Teilekennzahl (12) ein Übereinstimmungsgrad (14) ermittelt wird,
- für eine Auswahl (15) der höchsten Übereinstimmungsgrade (14), aus dem, der jeweiligen Referenz-Teilekennzahl (12) zugeordneten Werkstückdatensatz (16), eine Übersichtsdarstellung (17) extrahiert wird,
- und die Auswahl (15) der Übereinstimmungsgrade (14) zusammen mit den zugehörigen Übersichtsdarstellungen (17), an eine Mensch-Maschine-Schnittstelle (18) des Steuerungssystems (20) übermittelt wird,
• im Auswahlschritt
von der Mensch-Maschine-Schnittstelle (18)
- die übermittelten Übereinstimmungsgrade (14) und Übersichtsdarstellungen (17) an einem Bildausgabemittel (19) des Steuerungssystems (20) dargestellt werden,
- mittels eines Steuerelements (21) der Mensch-Maschine-Schnittstelle (18) ein Übereinstimmungsgrad (14) bzw. die dazugehörige Übersichtsdarstellung (17) ausgewählt wird,
- die Auswahl an das Datenverarbeitungsmodul (6) rückübermittelt wird,
• im Anwendungsschritt
vom Datenverarbeitungsmodul (6)
der der Auswahl entsprechende Werkstückdatensatz (16) aus dem Datenspeicher (13) geladen und an das Steuerungssystem (20) übertragen wird,
wobei
mittels zumindest eines aus Fokusfreistellung, Kantendetektion, Kontrastdetektion, Hintergrundsabzug, Bestimmung des optischen Flusses, im erfassten Abbild (4) die Umgrenzungslinie des zu bearbeitenden Blechteils (2) bestimmt wird und jener Bildausschnitt als Bearbeitungsfenster (8) festgelegt wird, der die Umgrenzungslinie enthält,
und
im anschließenden Musterfindungsprozess mittels zumindest eines aus Kantendetektion, Kontrastverstärkung, Merkmalsdetektion und Extraktion, Lernende Merkmalsdetektion, im Bearbeitungsfenster (8) Bohrungen und/oder Umrisskanten des zu bearbeitenden Blechteils (2) ermittelt werden.

2. Biegeschritt-Auswahlverfahren nach Anspruch 1, **dadurch gekennzeichnet, dass** das Bilderfassungsmittel (3) durch ein mobiles Kommunikationsgerät, insbesondere ein Smartphone oder ein Tablet, gebildet ist, und als Kommunikationsverbindung (5) eine Datenübertragungstechnologie für Mobilgeräte verwendet wird, insbesondere eine 2G-, 3G-, 4G-, 5G Kommunikationstechnologie, oder WLAN.

3. Biegeschritt-Auswahlverfahren nach Anspruch 1, **dadurch gekennzeichnet, dass** das Bilderfassungsmittel (3) durch ein an der Biegemaschine im Bereich vor einem Druckbalken angeordnetes Kamerasystem, umfassend zumindest eine 2D Kamera, gebildet ist, und als Kommunikationsverbindung (5) eine Datenübertragungstechnologie für kabelgebundene Kommunikation verwendet wird, beispielsweise USB, CAN-Bus oder Ethernet.

4. Biegeschritt-Auswahlverfahren nach einem der Ansprüche 1 bis 3, **dadurch gekennzeichnet, dass** das Bearbeitungsfenster (8) geringfügig größer als die Umgrenzungslinie ist, wobei vorzugsweise das Bearbeitungsfenster (8) rechteckig ist.

5. Biegeschritt-Auswahlverfahren nach einem der Ansprüche 1 bis 4, **dadurch gekennzeichnet, dass** die Teilekennzahl als Streuwertfunktion der ermittelten geometrischen Merkmale (9) gebildet wird.

6. Biegeschritt-Auswahlverfahren nach einem der Ansprüche 1 bis 5, **dadurch gekennzeichnet, dass** von einem Arbeitsvorbereitungssystem aus Konstruktionsdaten eine Übersichtsdarstellung des abgewickelten Blechteils (2) und eine Teilekennzahl ermittelt wird, und die Konstruktionsdaten, die Übersichtsdarstellung und die Teilekennzahl als Werkstückdatensatz (16) erstellt und im Datenspeicher (13) des Datenverarbeitungsmoduls (6) hinterlegt wird.

7. Biegeschritt-Auswahlverfahren nach einem der Ansprüche 1 bis 6, **dadurch gekennzeichnet, dass** die übermittelten Übereinstimmungsgrade (14) und Übersichtsdarstellungen nach absteigendem Übereinstimmungsgrad (14) geordnet dargestellt werden.

8. Biegeschritt-Auswahlverfahren nach einem der Ansprüche 1 bis 7, **dadurch gekennzeichnet, dass** der Übereinstimmungsgrad (14) als Anteilswert der Ist-Teilekennzahl (10) von der Referenz-Teilekennzahl (12) ermittelt wird.

9. Biegeschritt-Auswahlverfahren nach einem der Ansprüche 1 bis 8, **dadurch gekennzeichnet, dass** der Auswahlschritt nur dann ausgeführt wird, wenn mehrere Übereinstimmungsgrade (14) ermittelt wurden.

## Claims

1. A bending step selection method (1)
carried out on a control system (20) of a bending machine, said bending machine having been fed a sheet metal part (2) to be machined
comprising
an image capturing step,
an image preparation and analysis step,
a comparison step,
a selection step, and
an application step,
wherein
• in the image capturing step,
an image capturing means (3)
- captures an image (4) of a sheet metal part (2) to be machined,
- transmits the captured image (4) to a data processing module (6) via a communication connection (5),
• in the image preparation and analysis step,
an image preparation module (7) of the data processing module (6)
- detects the sheet metal part (2) in the captured image (4) and determines a processing window (8) in the captured image (4),
- carries out a pattern-finding process in the processing window (8),
- and determines an actual part index number (10) from detected geometric features (9),
• in the comparison step,
a comparison module (11) of the data processing module (6)
- reads out from a data memory (13), which is connected to the data processing module (6), workpiece data sets stored therein and respectively extracts a reference part index number (12) therefrom,
- compares the determined actual part index number (10) to the extracted reference part index numbers (12),
- determines a degree of conformity (14) for each extracted reference part index number (12) during the comparison,
- extracts - for a selection (15) of the highest degrees of conformity (14) - an overview representation (17) from the workpiece data set (12) assigned to the respective reference part index number (16),
- and transmits the selection (15) of the degrees of conformity (14) together with the associated overview representations (17) to a human-machine interface (18) of the control system (20),
• in the selection step,
the human-machine interface (18)
- represents the transmitted degrees of conformity (14) and overview representations (17) on an image output means (19) of the control system (20),
- by means of a control element (21) of the human-machine interface (18), selects a degree of conformity (14) and/or the associated overview representation (17),
- transmits the selection back to the data processing module (6),
• in the application step,
the data processing module (6)
loads the workpiece data set (16) according to the selection from the data memory (13) and transmits it to the control system (20).
wherein
the boundary line of the sheet metal part (2) to be machined is determined in the captured image (4) by means of at least one of focus keying, edge detection, contrast detection, background subtraction, determination of the optical flow, and the image section containing the boundary line is determined as the processing window (8),
and
in the subsequent pattern-finding process bores and/or boundary edges of the sheet metal part (2) to be machined are determined in the processing window (8) by means of at least one of edge detection, contrast intensification, feature detection and extraction, learning feature detection.

2. The bending step selection method according to claim 1, **characterized in that** the image capturing means (3) is formed by a mobile communication device, in particular a smart phone or a tablet, and a data transmission technology for mobile devices, in particular a 2G, 3G, 4G or 5G communication technology, or WLAN, is used as the communication connection (5).

3. The bending step selection method according to claim 1, **characterized in that** the image capturing means (3) is formed by a camera system, comprising at least one 2D camera arranged on the bending machine in the region in front of a pressure beam, and that a data transmission technology for tethered communication, for example USB, CAN bus or Ethernet, is used as the communication connection (5).

4. The bending step selection method according to one of claims 1 to 3, **characterized in that** the processing window (8) is slightly larger than the boundary line, wherein preferably, the processing window (8) is rectangular.

5. The bending step selection method according to one of claims 1 to 4, **characterized in that** the part index number is composed as an erratic value function of the detected geometric features (9).

6. The bending step selection method according to one of claims 1 to 5, **characterized in that** a work preparation system determines an overview representation of the unbent sheet metal part (2) and a part index number from construction data and compiles the construction data, the overview representation and the part index number as workpiece data set (16) which is then stored in the data memory (13) of the data processing module (6).

7. The bending step selection method according to one of claims 1 to 6, **characterized in that** the transmitted degrees of conformity (14) and overview representations are represented ordered by descending degree of conformity (14).

8. The bending step selection method according to one of claims 1 to 7, **characterized in that** the degree of conformity (14) is determined as a share value of the actual part index number (10) in the reference part index number (12).

9. The bending step selection method according to one of claims 1 to 8, **characterized in that** the selection step is carried out only if multiple degrees of conformity (14) were determined.

## Revendications

1. Procédé de sélection d'étape de cintrage (1) mis en oeuvre sur un système de commande (20) d'une machine à cintrer, cette machine à cintrer ayant été alimentée avec une pièce de tôle (2) à traiter,
comprenant
une étape d'acquisition d'image,
une étape de traitement et d'analyse de l'image,
une étape de comparaison,
une étape de sélection et
une étape d'application,
dans lequel
• dans l'étape d'acquisition d'image,
un moyen d'acquisition d'image (3)
- capture une représentation (4) d'une pièce de tôle (2) à traiter,
- transmet la représentation (4) capturée par l'intermédiaire d'une liaison de communication (5) à un module de traitement de données (6),
• dans l'étape de traitement et d'analyse de l'image,
un module de traitement d'image (7) du module de traitement de données (6)
- détecte la pièce de tôle (2) dans la représentation capturée (4) et définit une fenêtre de traitement (8) dans la représentation capturée (4),
- effectue dans la fenêtre de traitement (8) un processus de détection de motif,
- et détermine, à partir de caractéristiques géométriques (9) déterminées, un identifiant de pièce réel (10),
• dans l'étape de comparaison
un module de comparaison (11) du module de traitement de données (6)
- lit, à partir d'une mémoire de données (13) reliée au module de traitement de données (6), les ensembles de données de pièces enregistrés dans celle-ci et en extrait un identifiant de pièce de référence (12),
- compare l'identifiant de pièce réel (10) avec l'identifiant de pièce de référence (12),
- détermine, lors de la comparaison, pour chaque identifiant de pièce de référence (12), un degré de coïncidence (14),
- extrait, pour une sélection (15) des degrés de coïncidence (14) les plus élevés parmi l'ensemble de données de pièces (16) correspondant à l'identifiant de pièce de référence (12), une représentation d'ensemble (17),
- et transmet la sélection (15) des degrés de coïncidence (14) conjointement avec les représentations d'ensemble (17) correspondantes, à une interface homme-machine (18) du système de commande (20),
• dans l'étape de sélection
l'interface homme-machine (18)
- représente les degrés de coïncidence (14) et les représentations d'ensemble (17) transmis à un moyen de sortie d'image (19) du système de commande (20),
- sélectionne, au moyen d'un élément de commande (21) de l'interface homme-machine (18), un degré de coïncidence (14) respectivement la représentation d'ensemble (17) correspondante,
- transmet en retour la sélection au module de traitement de données (6),
• dans l'étape d'application
le module de traitement de données (6)
charge l'ensemble de données (16) correspondant à la sélection à partir de la mémoire de données (13) et le transmet au système de commande (20),
dans lequel
au moyen d'au moins d'une soustraction de la focalisation, d'une détection d'arêtes, d'une détection du contraste, d'une suppression de l'arrière-plan, d'une détermination du flux optique, la ligne de limitation de la pièce en tôle (2) à traiter est déterminée dans la représentation (4) capturée et la portion d'image qui contient la ligne de délimitation est définie comme fenêtre de traitement (8),
et
dans le processus de détection de motif qui suit les alésages et/ou les contours de la pièce en tôle (2) à traiter sont déterminés au moyen d'au moins un procédé parmi la détection des arêtes, le renforcement du contraste, la détection et l'extraction de caractéristiques, la détection de caractéristiques avec apprentissage, dans la fenêtre de traitement (8).

2. Procédé de sélection d'étape de cintrage selon la revendication 1, **caractérisé en ce que** le moyen d'acquisition d'image (3) est constitué d'un appareil de communication mobile, plus particulièrement un smartphone ou une tablette, et la liaison de communication (5) utilisée peut être une technologie de transmission de données pour des appareils mobiles, plus particulièrement une technologie de communication 2G, 3G, 4G, 5G ou WLAN.

3. Procédé de sélection d'étape de cintrage selon la revendication 1, **caractérisé en ce que** le moyen d'acquisition d'image (3) est constitué d'un système de caméra disposé sur la machine à cintrer au niveau d'une barre de pression, comprenant au moins une caméra 2D et la liaison de communication (5) utilisée peut être une technologie de transmission de données pour une communication filaire, par exemple USB, Bus CAN ou Ethernet.

4. Procédé de sélection d'étape de cintrage selon l'une des revendications 1 à 3, **caractérisé en ce que** la fenêtre de traitement (8) est légèrement plus grande que la ligne de délimitation, dans lequel, de préférence, la fenêtre de traitement (8) est rectangulaire.

5. Procédé de sélection d'étape de cintrage selon l'une des revendications 1 à 4, **caractérisé en ce que** l'identifiant de pièce se présente sous la forme d'une fonction de valeur de diffusion des caractéristiques géométriques (9) déterminées.

6. Procédé de sélection d'étape de cintrage selon l'une des revendications 1 à 5, **caractérisé en ce qu'**un système de préparation de travail détermine, à partir des données de construction, une représentation d'ensemble de la pièce en tôle (2) déroulée et un identifiant de pièce et crée les données de construction, la représentation d'ensemble et l'identifiant de pièce sous la forme d'un ensemble de données de pièce (16) et l'enregistre dans la mémoire de données (13) du module de traitement de données (6).

7. Procédé de sélection d'étape de cintrage selon l'une des revendications 1 à 6, **caractérisé en ce que** les degrés de coïncidence (14) transmis et les représentations d'ensemble sont représentés de manière ordonnée selon le degré de coïncidence (14) croissant.

8. Procédé de sélection d'étape de cintrage selon l'une des revendications 1 à 7, **caractérisé en ce que** le degré de coïncidence (14) est déterminé sous la forme d'une valeur partielle de l'identifiant de pièce réel (10) à partir de l'identifiant de pièce de référence (12).

9. Procédé de sélection d'étape de cintrage selon l'une des revendications 1 à 8, **caractérisé en ce que** l'étape de sélection n'est exécutée que lorsque plusieurs degrés de coïncidence (14) ont été déterminés.
